# EUROPEAN PATENT APPLICATION

(11) **EP 1 341 141 A2**
(43) Date of publication of application: **03.09.2003**
(21) Application number: 03251026.5
(22) Date of filing: 20.02.2003
(51) Int. Cl.: G09B 21/00

(54) **Braille letter reading apparatus**

(30) Priority: 27.02.2002 JP 2002051592
(71) Applicant: Shinano Kenshi Kabushiki Kaisha, Nagano 386-0498 (JP)
(72) Inventor: Nishizawa, Tatsuo, Shinano Kenshi K.K., Ueda-shi, Nagano 386-0012 (JP); Chonan, Seiji, Tohoku University, Sendai-shi, Miyagi 980-8579 (JP); Tanaka, Mami, Tohoku University, Sendai-shi, Miyagi 980-8579 (JP)
(74) Representative: Calderbank, Thomas Roger

(57) **Abstract**

The small-sized braille letter reading apparatus (20) of the present invention is capable of reducing a manufacturing cost and increasing reliability and durability of apparatus. The apparatus (20) comprises: a pressure sensor (30) being capable of simultaneously contacting all braille points (61) included in at least one of two braille lines constituting one braille letter, the pressure sensor generating (30) output signals corresponding to the detected braille points (61); and means (26) for analyzing data of the output signals and converting the braille letter into an ordinary letter when the pressure sensor (30) scans the two braille lines of the braille letter.

## Description

The present invention relates to a braille letter reading apparatus capable of reading braille letters and converting them into ordinary letters.

One of conventional braille letter reading apparatuses is disclosed in Japanese Patent Gazette No. 6-289775.

The conventional apparatus has a line of pressure sensors (piezo elements). A distance between the adjacent pressure sensors is shorter than that between adjacent braille points constituting a braille letter.

To read braille letters, the pressure sensors are integrally moved in a direction perpendicular to the direction of arranging the pressure sensors so as to scan braille points.

As described above, the distance between the adjacent pressure sensors is shorter than that between adjacent braille points so as to securely detect braille points and correctly read braille letters.

However, if many pressure sensors are used to precisely read braille letters, the braille letter reading apparatus must be large-sized, and many cables must be connected so that the apparatus must be hard to use.

By assembling many pressure sensors, a manufacturing cost of the apparatus must be increased. Further, sensitivity of many pressure sensors must be adjusted so that manufacturing efficiency must be lower.

If one of the pressure sensors is broken or insufficient, the braille letter cannot be read. Namely, reliability and durability must be lower.

An object of the present invention is to provide a small-sized braille letter reading apparatus, which is capable of reducing a manufacturing cost and increasing reliability and durability of apparatus.

To achieve the object, the present invention has following structures.

A first basic structure of the braille letter reading apparatus of the present invention comprises:
a pressure sensor being capable of simultaneously contacting all braille points included in at least one of two braille lines constituting one braille letter, the pressure sensor generating output signals corresponding to the detected braille points; and
means for analyzing data of the output signals and converting the braille letter into an ordinary letter when the pressure sensor scans the two braille lines of the braille letter.

With this structure, the apparatus has only one pressure sensor, so that the apparatus can be small-sized and light. Since number of parts can be reduced, adjustment of the pressure sensor can be simplified and a manufacturing cost of the apparatus can be reduced. Further, reliability and durability of the apparatus can be improved due to one pressure sensor.

A second basic structure of the braille letter reading apparatus comprises:
a pressure sensor; and
means for analyzing output signals of the pressure sensor and converting the braille letter into an ordinary letter when the pressure sensor scans two braille lines of braille points constituting one braille letter,
wherein width of the pressure sensor in a scanning direction is varied so as to vary time of contacting the braille points in different braille rows while scanning.

With this structure, in the case of reading similar braille letters whose braille points are similarly arranged in the braille lines, the braille letters can be securely identified because of different contact time. Namely, accuracy of reading braille letters can be improved.

In the braille letter reading apparatus, the pressure sensor may be formed into a right-angle triangle. One of two sides of the right-angle triangle other than the hypotenuse is arranged perpendicular to the scanning direction of the pressure sensor. The one side of the pressure sensor simultaneously contacts all of the braille points in the first braille line; the hypotenuse of the pressure sensor gradually leaves from the braille points in the second braille line. With this action, the time of contacting the braille points in different braille rows can be varied, so that accuracy of reading braille letters can be improved.

The braille letter reading apparatus may further comprise means for moving the pressure sensor so as to scan at fixed speed. With this structure, braille letters can be automatically read.

In the braille letter reading apparatus, the pressure sensor may be formed into a sheet-shape. In this case, the apparatus can be small-sized and light.

In the braille letter reading apparatus, the pressure sensor may be attached to an elastic member. With this structure, the pressure sensor is integrally deformed with the elastic member when the pressure sensor contacts the braille points, so that the braille letter can be securely read.

In the braille letter reading apparatus, the pressure sensor may be attached to a finger and manually scanned. In this case, the braille letter can be easily read.

The braille letter reading apparatus may further comprise means for correcting the data, which have been scanned at unfixed speed, to the data scanned at a fixed speed. With this structure, the braille letter can be securely and correctly read even if the scanning speed is unfixed.

Embodiments of the present invention will now be described by way of examples and with reference to the accompanying drawings, in which:
Fig. 1 is a block diagram of a braille letter reading apparatus of a first embodiment of the present invention;
Fig. 2 is a perspective view of a sensor section of the apparatus shown in Fig. 1;
Fig. 3 is a front view of the sensor section;
Fig. 4 is a block diagram of an analyzing section;
Fig. 5 is a waveform chart of output signals of a pressure sensor inputted to the analyzing section;
Fig. 6 is a graph showing integrated values of the output signals of the pressure sensor in each divided time period;
Fig. 7 is a plot chart of the integrated values of selected time periods S2 and S3 of braille letters;
Fig. 8 is a plot chart of the integrated values of selected time periods S3 and S9 of braille letters;
Fig. 9 is a plot chart of the integrated values of selected time periods S4 and S6 of braille letters;
Fig. 10 is an explanation view of the pressure sensor attached to a finger;
Fig. 11 is an explanation view of the pressure sensor of a second embodiment;
Fig. 12 is a graph of output signals outputted from a pressure sensor in which time of contacting the braille points in any braille rows are equal; and
Fig. 13 is a graph of output signals outputted from a pressure sensor in which time of contacting the braille points in different braille rows are varied.

Preferred embodiments of the present invention will now be described in detail with reference to the accompanying drawings.

### (First Embodiment)

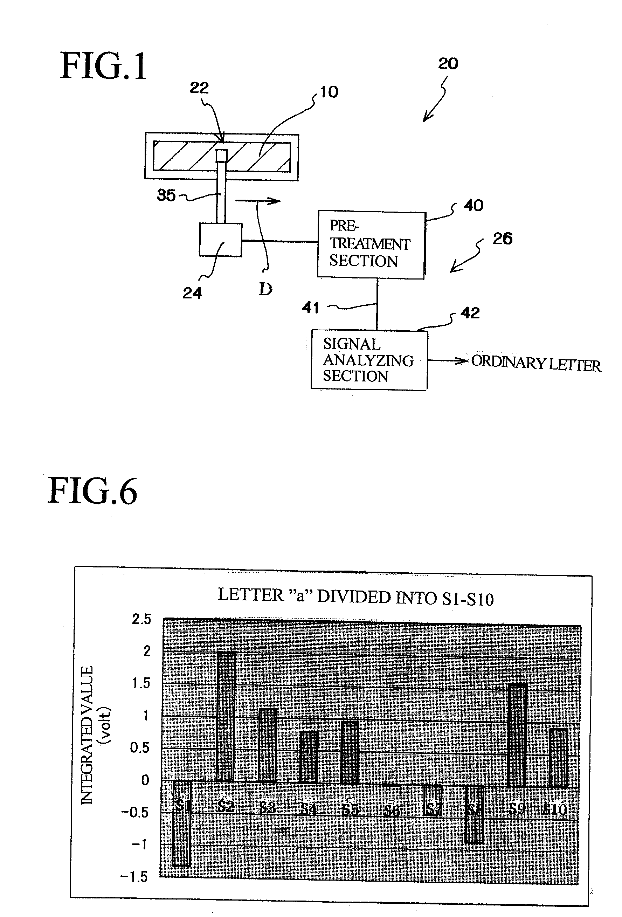

A block diagram of the braille letter reading apparatus of a first embodiment is shown in Fig. 1.

The braille letter reading apparatus 20 has: a sensor section 22 reading braille letters written in an object medium 10; moving means 24 for moving the sensor section 22 in a reading direction "D" at a fixed speed so as to scan the braille letters; and analyzing means 26 for analyzing data of output signals of the sensor section 22 and converting the braille letters into ordinary letters.

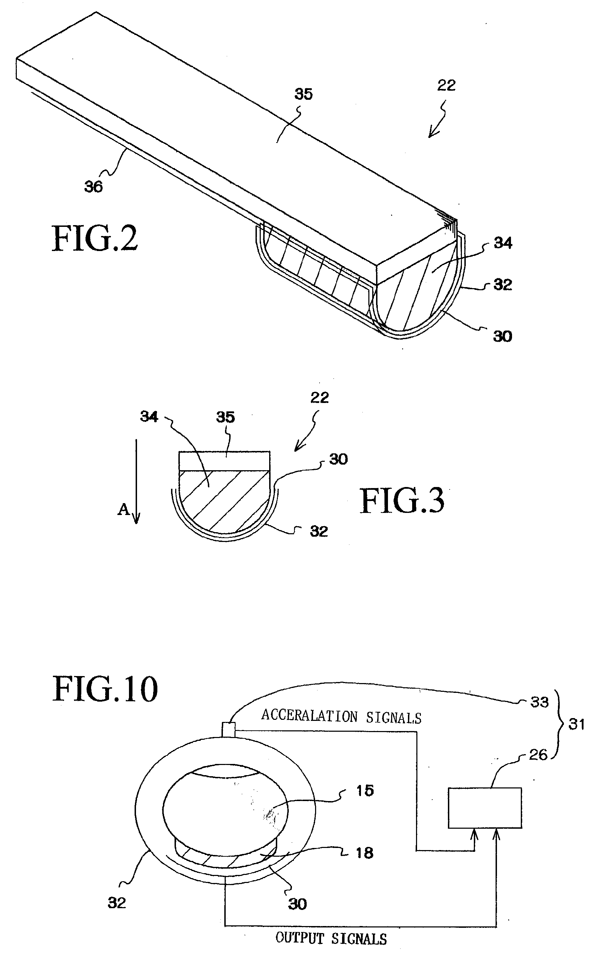

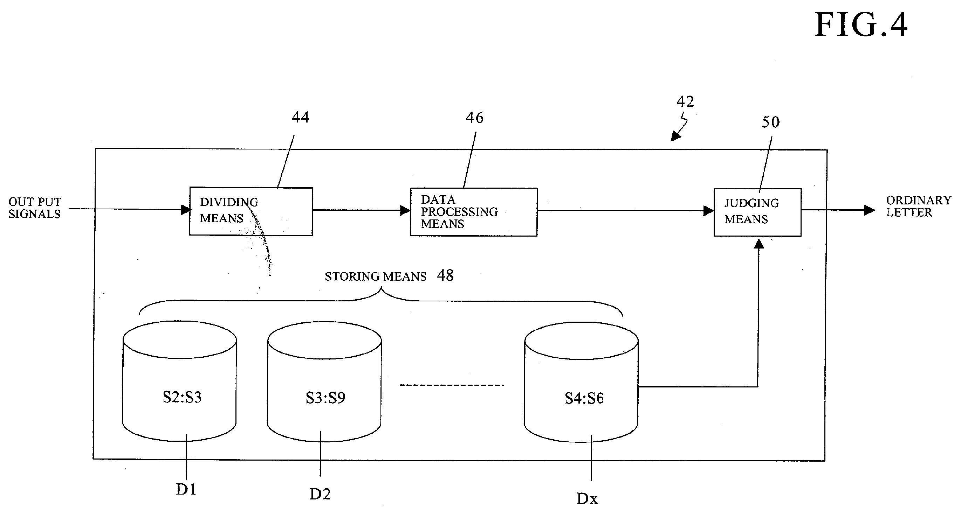

The sensor section 22 will be explained with reference to Figs. 2 and 3.

The sensor section 22 includes: a sheet-shaped pressure sensor 30 capable of converting pressure into electric signals; a protection sheet 32 covering over a surface of the pressure sensor 30; and an elastic member 34 to which the pressure sensor 30 is attached. In the present embodiment, the pressure sensor 30 is a piezoelectric sensor, which is capable of converting pressure into electric voltage.

The elastic member 34 is made of, for example, sponge. The elastic member 34 should be made of materials which can easily deform along projected braille points and which can restore to an original shape when it leaves from the braille points. Namely, the material of the elastic member 34 is not limited to sponge, so it may be made of, for example, rubber.

Function of the pressure sensor 30 will be explained.

One braille letter is constituted by two lines of braille points. The pressure sensor 30 is formed into a sheet-shape capable of simultaneously contacting all of the braille points included in at least one of the two braille lines. By moving the pressure sensor 30 in a reading direction or a scanning direction, the pressure sensor 30 can contact all of the braille points in the both braille lines.

In the present embodiment, firstly the pressure sensor 30 contacts the braille points in the first braille line; by moving the pressure sensor 30 in the reading direction, the pressure sensor 30 contact the braille points in the first and the second braille lines; by further moving pressure sensor 30, the pressure sensor 30 contacts the braille points in the second braille line.

The pressure sensor 30 detects variation of pressure of each braille line while scanning a braille letter.

The sensor section 22 is connected to the moving means 24 by a plate-shaped connecting member 35. With this structure, the pressure sensor 30 is always biased toward the object medium 10 (in a direction "A" shown in Fig. 3) by the connecting member 35. Namely, a fixed pressing force is applied to the pressure sensor 30, so that the variation of pressure caused by braille points can be detected.

Note that, signal cables 36 extended from the pressure sensor 30 are provided on a bottom face of the connecting member 35.

The moving means 24 moves the sensor section 22 in the reading direction (the scanning direction) at a fixed speed, so many means can be employed as the moving means 24. In the present embodiment, the connecting means 35 is moved, together with the sensor section 22, in the reading direction by the moving means 24, e.g., a motor, a hydraulic cylinder unit, a pneumatic cylinder unit.

The analyzing means 26 includes: a pretreatment section 40 amplifying output signals of the sensor section 22, which indicate pressure applied to the pressure sensor 30 from braille points, and reducing noises therefrom; and a signal analyzing section 42 analyzing the amplified signals and converting the braille letter into an ordinary letter. In the present embodiment, the pretreatment section 40 and the signal analyzing section 42 are connected by a signal line 41, but they may be integrated as one section.

The pretreatment section 40 has a known amplifying circuit, a known noise reducing circuit, etc. so as to easily process the output signals from the pressure sensor 30 in the signal analyzing section 42.

The signal analyzing section 42 will be explained with reference to Fig. 4.

Each braille letter is scanned by the pressure sensor 30 at fixed speed. Dividing means 44 divides time for scanning one braille letter into a plurality of time periods and calculates an integrated value of voltage of the output signals, which have been amplified by the pretreatment section 40, in each time period.

Data processing means 46 receives the integrated values of the scanned braille letter and prepares a plurality of pairs of the integrated values for the scanned braill letter. Each pair of the integrated values are the integrated values of two time periods. The pairs of the time periods have been previously selected.

Storing means 48, e.g., ROM, stores a plurality of pairs of the integrated values for each registered braill letter as standard values. The standard values have been previously calculated. Each pair of the standard values are the integrated values of two time periods. The two time periods are equal to those for the scanned braille letter. The standard values of each pair of the time periods are respectively stored as data tables D1-Dx. Note that, in the present embodiment, many braille letters are registered.

Judging means 50 judges the scanned braille letter if the scanned braille letter corresponds to one of the registered braille letters or not. The judging means 50 judges by comparing a pair of the integrated values of the scanned braille letter with those (the standard values) of the registered braille letter. When the pair of the integrated values of the scanned braille letter coincide with those (the standard values) of one of the registered braille letters in the same time periods, the judging means 50 judges that the braille letter scanned by the pressure sensor 30 is equal to the registered braille letter coincided.

The detail action of the signal analyzing section 42 will be explained.

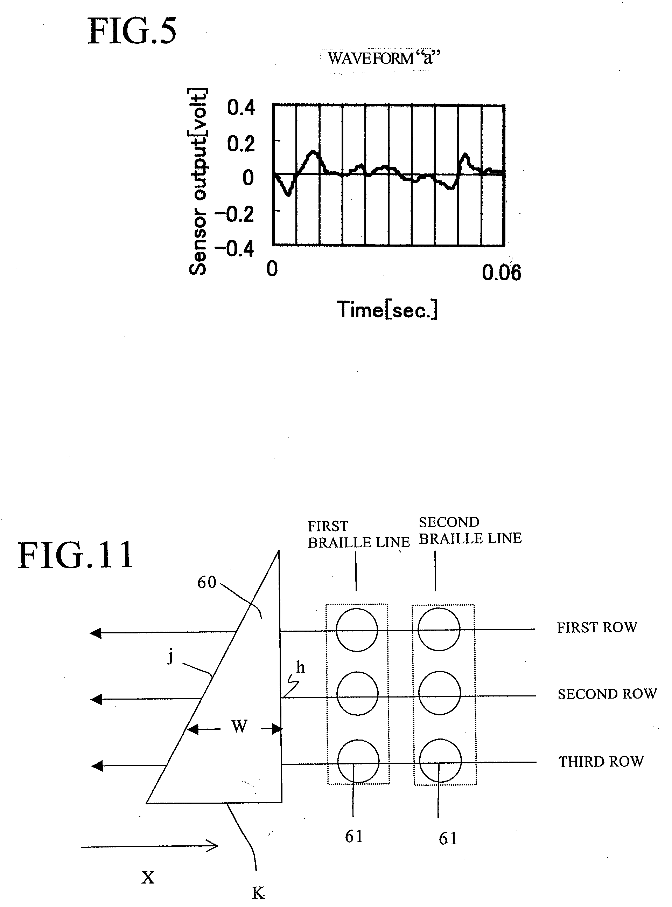

A waveform of the output signals sent from the pressure sensor 30 of the sensor section 22 to the signal analyzing section 42 is shown in a graph of Fig. 5.

The horizontal axis of the graph is time; the vertical axis thereof is voltage of the output signals. In Fig. 5, the waveform is the output signals when the pressure sensor 30 scans a braille letter "a". Since the moving means 24 always moves the sensor section 22 at the fixed speed, the pressure sensor 30 can scan one braille letter for a fixed time. In the present embodiment, it takes 0.06 sec. to scan one braille letter.

While the single pressure sensor 30 scans one braille letter, the voltage of the output signals extremely varies.

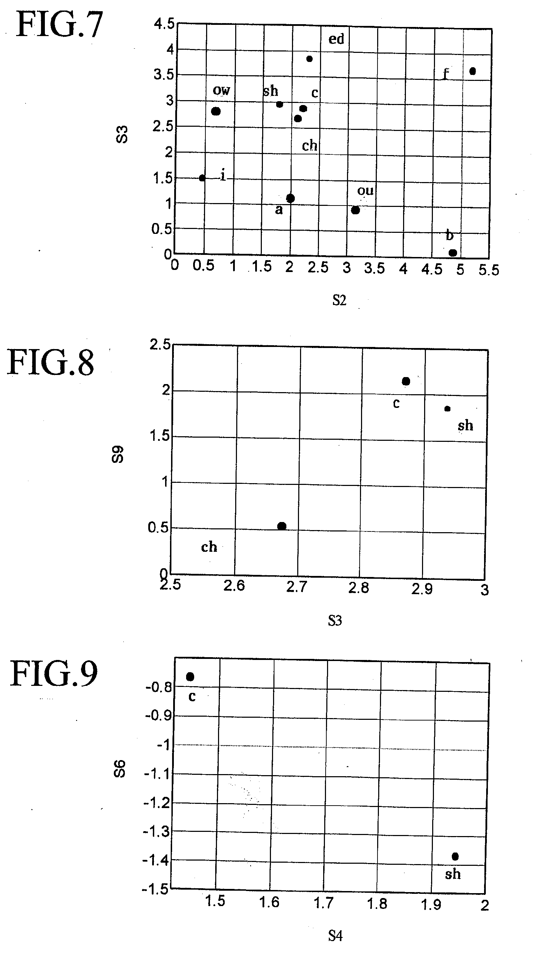

When the output signals shown in Fig. 5 are inputted to the dividing means 44, the dividing means divides the scanning time into ten time periods and calculates an integrated value of the voltage of the output signals for each time period. The integrated values of the time periods, which have been calculated by the dividing means 44, are shown in Fig. 6.

In Fig. 6, a horizontal axis indicates the divided time periods S1-S10; a vertical axis indicates the integrated value of the voltage of the output signals.

Namely, the integrated value in the time period S1 is -1.3 V, that in the time period S2 is 2.0 V, that in the time period S3 is 1.2 V,......... Ten integrated values have been calculated.

The ten integrated values of the time periods S1-S10 are inputted to the data processing means 46. The data processing means 46 prepares a plurality of pairs of the integrated values for the scanned braillletter. For example, pairs are the integrated values of the time periods S1 and S2; those S2 and S3. Namely, the integrated values of different two time periods are combined as the pair.

As described above, the storing means 48 includes the data tables D1-Dx.

In each of the data tables D1-Dx, the standard values of a selected pair of time periods of the registered braille letters have been stored. They are plotted in a virtual plane formed in each data table as described later. In the present embodiment, the standard values are defined by the steps of: dividing the time for scanning one braille letter, by the pressure sensor 30, into a plurality of the time periods, e.g., ten time periods S1-S10; calculating the integrated value of the voltage of the output signals for each of the time periods S1-S10; and storing the integrated values of the selected pairs of the time periods in the selected data table as the standard values. In each of the data tables D1-Dx, a pair of the standard values of each braille letter are plotted in the virtual plane. Concrete examples will be explained with reference to Figs. 7-9.

Fig. 7 is a plot chart in the virtual plane of the data table D1, wherein a horizontal axis indicates the standard values of the time period S2, and a vertical axis indicates the standard values of the time period S3; Fig. 8 is a plot chart in the virtual plane of the data table D2, wherein a horizontal axis indicates the standard values of the time period S3, and a vertical axis indicates the standard values of the time period S9; and Fig. 9 is a plot chart in the virtual plane of the data table Dx, wherein, a horizontal axis indicates the standard values of the time period S4, and a vertical axis indicates the standard values of the time period S6.

The standard values of a plurality of the registered braille letters are plotted in the virtual plane of each data table. For example, in Fig. 7, the standard values of the time periods S2 and S3 of the registered braille letters "a","b", "c", "f", "i", "ch", "ou", "sh", "ed" and "ow" are plotted.

The action of the judging means 50 will be explained with reference to Figs. 7-9.

As described above, an object braille letter is scanned by the pressure sensor 30. Then, the dividing means divides the scanning time into the time periods S1-S10 and calculates integrated value of the time periods S1-S10.

Preferably, the integrated values of the scanned braille letter are firstly compared with the standard values of the data table D1, in which the standard values are widely scattered in the virtual plane. Degree of scattering the standard values in the data tables D1-Dx have been previously known, and order of the data table may be written in a firmware.

If the integrated values of the time periods S2 and S3 of the scanned braille letter (S2 : S3) are about 2.0 V and 1.0 V (2 : 1), the standard values stored in the data table D1 of the time periods S2 and S3 are searched. Namely, a registered braille letter, whose S2 : S3 is 2 : 1, is searched from the data table D1 (see Fig. 7) . S2 : S3 of the registered braille letter "a" is nearly 2 : 1, so that the scanned braille letter is judged "a". The judging means 50 outputs signals for converting into the ordinary letter "a".

In the case of S2 : S3 = 2 : 2.7, three braille letters "c", "ch" and "sh" are closely plotted (see Fig. 7). Therefore, the scanned braille letter cannot be identified on the basis of the data table D1.

Thus, if S2 : S3 = 2 : 2.7, the data table D2 of S3 : S9 is searched. If S3 : S9 of the scanned braille letter is 2.7 : 0.5, the scanned braille letter is judged "ch" (see Fig. 8). On the other hand, if S3 : S9 of the scanned braille letter is 2.9 : 2, the letters "c" and "sh" cannot be distinguished.

Thus, if S3 : S9 = 2.9 : 2, the data table D3 of S4 : 1 S6 (see Fig. 9) is searched.

The letters "c" and "sh" cannot be distinguished by the data tables D1 and D2. However, as shown in Fig. 9, the letters "c" and "sh" are separately plotted in the data table D3, so that the scanned braille letter can be distinguished.

For example, if S4 : S6 = 1.2 : -0.8, the scanned braille letter is judged "c".

Since the standard values of the registered braille letters have been previously defined, the scanned braille letter can be correctly judged or identified even if the braille letter is scanned by the single pressure sensor 30.

The standard values of the registered braille letters and the integrated values of the scanned braille letter are not mere sample voltage. Namely, they are the integrated values of voltage of the output signals in each time period, so that the scanned braille letter can be correctly analyzed with less errors.

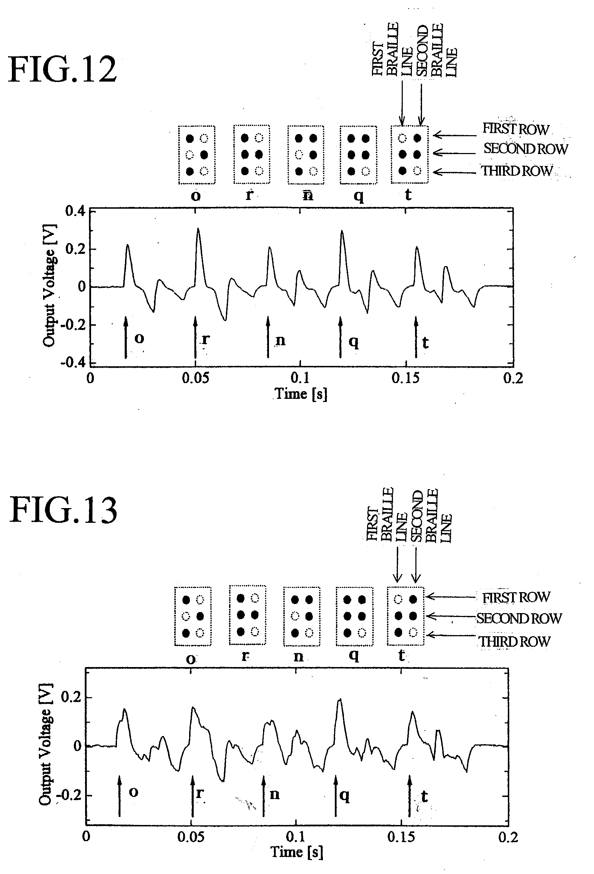

In the present embodiment, the sensor section 22 is moved by the moving means 24 so as to automatically scan braille letters. However, the sensor 30 may be attached to a finger (see Fig. 10), and braille letters may be manually scanned. In this case too, the analyzing means 26 can be employed, so explanation of the analyzing means will be omitted.

In Fig. 10, the pressure sensor 30 is attached to a finger 15. A film-shaped sensor 30 is provided on a lower surface of the finger 15 with an inner protection sheet 18. The inner protection sheet 18 may be made of an elastic material. Note that, the finger 15 has elasticity, so the pressure sensor 30 is capable of sensing the pressure even if the inner protection sheet 18 has less elasticity.

A surface protection sheet 32 covers an outer face of the pressure sensor 30 and the finger 15, so that the pressure sensor 30 can be attached to the finger 15. The pressure sensor 30 is protected the both protection sheets 18 and 32.

By attaching the pressure sensor 30 to the finger 15, braille letters can be scanned and analyzed by the single pressure sensor. It is difficult to move the pressure sensor 30 attached to the finger 15 at a fixed speed. Thus, correcting means 31 is provided. The correcting means 31 corrects the data of the output signals, which have been scanned at unfixed speed, to the data scanned at a fixed speed.

In the present embodiment, the correcting means 31 includes an acceleration sensor 33, which is attached to the finger 15, and the analyzing means 26. Namely, acceleration data are inputted to the analyzing means 26, and the analyzing means 26 corrects the data of the output signals of the pressure sensor 30, on the basis of the acceleration data, to the data scanned at a fixed speed.

### (Second Embodiment)

Next, a second embodiment of the present invention will be explained with reference to Figs. 11-13. The feature of the second embodiment is a shape of a pressure sensor 60.

Note that, the analyzing means and the judging means of the second embodiment are equal to those of the first embodiment, so explanation will be omitted.

In the second embodiment, a planar shape of the pressure sensor 60 is a right-angled triangle shape as shown in Fig. 11. Namely, the pressure sensor 60 has a hypotenuse "j" and right-angled sides "h" and "k". The hypotenuse "j" is inclined with respect to a scanning (moving) direction of the pressure sensor 60; the side "h" is perpendicular to the scanning direction "x".

Length of the side "h" of the pressure sensor 60 is designed to simultaneously contact all braille points 61 in all rows.

The shape of the pressure sensor 60 will be explained in detail.

When braille letters "o" , "r", "n", "q" and "t" are scanned by a rectangular-shaped pressure sensor, the output signals shown in Fig. 12 are generated by the rectangular sensor. As clearly shown in Fig. 12, the waveforms of the braille letters "n" and "t" are very similar. The reason is that the brail points 61 of the the braille letters "n" and "t" are similarly arranged, so that the waveforms are very similar.

Namely, in the braille letter "n", the braille points 61 are located in a first row and a third row of a first braille line, and the first row and a second row of a second braille line. On the other hand, in the braille letter "t", the braille points 61 are located in a second row and a third row of a first braille line, and a first row and the second row of a second braille line.

If positions of the braille points 61 in the first and the second braille lines are the same or similar, the pressure sensed by the rectangular sensor is similarly varied when the rectangular sensor transfers from the first braille line to the second braille line, so that the waveforms are very similar.

If width of the pressure sensor in a scanning direction is varied so as to vary time of contacting the braille points in different braille rows while scanning, the above described problem of the rectangular pressure sensor can be solved.

Note that, the braille row means a line of the braille points parallel to the scanning direction; the braille line means a line of the braille points perpendicular to the scanning direction.

In the present embodiment, the pressure sensor 60 is formed into the right-angled triangle shown in Fig. 11. Therefore, the time of contacting the braille rows are respectively different while scanning each braille letter.

For example, the pressure sensor 60 is moved in the scanning direction "x", which is perpendicular to the side "h" of the sensor 60. With this action, the pressure sensor 60 simultaneously begins to contact the braille points 61 in the first braille line; the pressure sensor 60 respectively leaves from the braille points 61 in the second braille line with time lags. Therefore, a border of adjacent braille letters can be clearly detected. Since the time of contacting the braille rows are respectively different, the braille letters can be easily and securely distinguished and judged.

The action of the second embodiment will be explained.

The pressure sensor 60 is moved in the direction "x" perpendicular to the side "h" so as to scan a braille letter. Firstly, the side "h" of the pressure sensor 60 simultaneously begins to contact all of the braille points 61 in the first braille line. By further moving the pressure sensor 60, the hypotenuse "j" of the pressure sensor 60 leaves from the braille points 61 in the first to the third row of the second braille line in that order. The contact time is gradually made longer from the first row to the third row. In other words, the width "w" of the pressure sensor 60 in the scanning direction "x" is varied so as to vary the time of contacting the braille points 61 in the different braille rows while scanning.

When braille letters "o", "r", "n", "q" and "t" are scanned by the pressure sensor 60, the output signals shown in Fig. 13 are generated by the sensor 60.

By employing the pressure sensor 60, the braille letters "n" and "t", which cannot be clearly distinguished by the rectangular pressure sensor, can be clearly distinguished. Difference of the braille points 61 in the first lines can be clearly distinguished.

Note that, the shape of the pressure sensor of the second embodiment is not limited to the right-angled triangle. Namely, other shapes, which is capable of varying the time of contacting the braille points in the different braille rows, may be employed.

The invention may be embodied in other specific forms without departing from the spirit or essential characteristics thereof. The present embodiments are therefore to be considered in all respects as illustrative and not restrictive, the scope of the invention being indicated by the appended claims rather than by he foregoing description and all changes which come within the meaning and range of equivalency of the claims are therefore intended to be embraced therein.

## Claims

1. A braille letter reading apparatus (20), comprising:
a pressure sensor (30) generating output signals corresponding to detected braille points (61), which are included in two braille lines constituting one braille letter; and
means (26) for analyzing data of the output signals and converting the braille letter into an ordinary letter when said pressure sensor (30) scans the two braille lines of the braille letter,
**characterized in that** said pressure sensor (30) is capable of simultaneously contacting all of the braille points (61) included in at least one of the two braille lines.

2. A braille letter reading apparatus (20), comprising:
a pressure sensor (60); and
means (26) for analyzing output signals of said pressure sensor (60) and converting the braille letter into an ordinary letter when said pressure sensor (60) scans two braille lines of braille points (61) constituting one braille letter,
**characterized in that** width (w) of said pressure sensor (60) in a scanning direction (x) is varied so as to vary time of contacting the braille points (61) in different braille rows while scanning.

3. The braille letter reading apparatus (20) according to claim 2, wherein said pressure sensor (60) is formed into a right-angle triangle.

4. The braille letter reading apparatus (20) according to claim 1, 2 or 3, further comprising means (24) for moving said pressure sensor (30, 60) so as to scan at fixed speed.

5. The braille letter reading apparatus (20) according to claim 1, 2, 3 or 4, wherein said pressure sensor (30, 60) is formed into a sheet-shape.

6. The braille letter reading apparatus (20) according to claim 1, 2, 3, 4 or 5, wherein said pressure sensor (30, 60) is attached to an elastic member (34).

7. The braille letter reading apparatus (20) according to claim 1, 2, 3, 4, 5 or 6, wherein said pressure sensor (30, 60) can be attached to a finger (15) and manually scanned.

8. The braille letter reading apparatus (20) according to claim 7, further comprising means (31) for correcting the data, which have been scanned at unfixed speed, to the data scanned at a fixed speed.
